# EUROPEAN PATENT APPLICATION

(11) **EP 4 480 811 A1**
(43) Date of publication of application: **25.12.2024**
(21) Application number: 23180673.8
(22) Date of filing: 21.06.2023
(51) Int. Cl.: B64C 1/12, B64C 3/26, B64D 33/10, F28F 7/02, B64D 15/02, B64D 41/00, F28D 21/00, F28F 3/12

(54) **AIRCRAFT COOLING DEVICE**

(71) Applicant: Airbus Operations GmbH, 21129 Hamburg (DE)
(72) Inventor: Hegenbart, Matthias, 21129 Hamburg (DE); Linde, Peter, 21129 Hamburg (DE)
(74) Representative: KASTEL Patentanwälte PartG mbB

(57) **Abstract**

The invention provides an aircraft cooling device (84) for cooling a fluid (46) in a fluid supply and/or drainage device (70) of an aircraft (88) in flight, the aircraft cooling device (84) being configured as a skin component (104) for the aircraft (88), the skin component (104) including an integrated ply (106) of one or more hollow fibers (54), each hollow fiber (54) being configured for conducting the fluid (46) from one end portion (56) to another end portion (56) of the hollow fiber (54) such that the fluid supply and/or drainage device (70) is enabled to pump the fluid (46) through the one or more hollow fibers (54) when in fluid connection with ply (106).

## Description

The invention relates to an aircraft cooling device for cooling a fluid in a fluid supply and/or drainage device of an aircraft in flight. The invention further relates to an aircraft fluid supply and/or drainage device, an aircraft fuel cell arrangement, and an aircraft.

For cooling a coolant in land and air vehicles, the cooling head wind usually is utilized. Especially in an aircraft, where the outer temperature is appr. -60°C, it contains cooling potential that should be utilized. Depending on size and location of the fuel cells, possibilities that offer themselves are: heat exchanger/radiator at the engine of the aircraft, as is applied, e.g., for piton engines, or in other locations with head wind such as radiators in the belly fairing of the aircraft. The solutions have in common that considerable aerodynamic drag may be generated and weight may be increased, which increases energy consumption.

The object of the invention is to provide an efficient, light-weight, and small-size cooling device for an aircraft.

To achieve this object, the invention provides an aircraft cooling device for cooling a fluid in a fluid supply and/or drainage device of an aircraft in flight according to claim 1. An aircraft fluid supply and/or drainage device, an aircraft fuel cell arrangement, and an aircraft are subject-matter of the parallel claims.

Advantageous embodiments of the invention are subject-matter of the dependent claims.

In one aspect, the invention provides a polar plate for use in a fuel cell device, the polar plate including an integrated fiber arrangement of one or more hollow fibers, each hollow fiber being configured for conducting a fluid from one end portion to another end portion of the hollow fiber such that the fluid can be pumped through the one or more hollow fibers.

Preferably, the hollow fibers respectively:
- are configured as carbon fibers; and/or
- are configured for structure-reinforcing the polar plate; and/or
- include one or more cavities extending from one of the end portions to the other of the end portions of the hollow fiber.

Preferably, the polar plate is configured as a composite and/or laminate, the fiber arrangement preferably building a carbon-fiber reinforced plastic composite.

Preferably, the hollow fibers are configured for conducting a coolant, preferably a liquid, more preferably water or a water-based coolant.

Preferably, the fiber arrangement is arranged substantially parallel to and/or in a vicinity of an active surface of the polar plate, the active surface preferably including a plate structure.

Preferably, the fiber arrangement is integrated in the plate structure.

Preferably, the one or more hollow fibers of the fiber arrangement are substantially aligned along a direction DS of the plate structure.

Preferably, the one or more hollow fibers are arranged in parallel to each other and/or fluidly disconnected between the end portions.

Preferably, the one or more hollow fibers are integrated in a filament, preferably a thermoplastic filament.

Preferably, the fiber arrangement includes an inlet and/or an outlet that are respectively in fluid connection with the corresponding end portions of the hollow fibers.

In another aspect, the invention provides a fuel cell device, including a polar plate according to any of the preceding embodiments.

In another aspect, the invention provides a fuel cell arrangement, including the fuel cell device and a fluid supply and/or drainage device in fluid connection with the fiber arrangement for pumping a fluid through the one or more hollow fibers.

Preferably, the fuel cell arrangement is configured as a fluid circulation system for circulating the fluid through the one or more hollow fibers.

In another aspect, the invention provides an aircraft cooling device for cooling a fluid in a fluid supply and/or drainage device of an aircraft in flight, the aircraft cooling device being configured as a skin component for the aircraft, the skin component including an integrated ply of one or more hollow fibers, each hollow fiber being configured for conducting the fluid from one end portion to another end portion of the hollow fiber such that the fluid supply and/or drainage device is enabled to pump the fluid through the one or more hollow fibers when in fluid connection with ply.

Preferably, the hollow fibers respectively:
- are configured as carbon fibers; and/or
- are configured for structure-reinforcing the skin component; and/or
- include one or more cavities extending from one of the end portions to the other of the end portions of the hollow fiber.

Preferably, the skin component is configured as a composite and/or laminate, the ply preferably building a carbon-fiber reinforced plastic composite.

Preferably, the ply is integrated in an outermost layer of the skin component.

Preferably, the hollow fibers are configured for conducting a coolant, preferably a liquid, more preferably water or a water-based coolant.

Preferably, the skin component is configured as a wing-fuselage fairing, a belly fairing and/or a part thereof.

In another aspect, the invention provides an aircraft fluid supply and/or drainage device, including the aircraft cooling device according to any of the preceding embodiments.

In another aspect, the invention provides an aircraft fuel cell arrangement, including the aircraft fluid supply and/or drainage device and a fuel cell device, the fuel cell device being configured to be fluidly connectable with the aircraft fluid supply and/or drainage device, the aircraft fluid supply and/or drainage device being in fluid connection with the fuel cell device for cooling thereof.

Preferably, the fuel cell device includes a polar plate, the polar plate including an integrated fiber arrangement of one or more hollow fibers, each hollow fiber being configured for conducting a fluid from one end portion to another end portion of the hollow fiber such that the fluid can be pumped through the one or more hollow fibers, the aircraft fluid supply and/or drainage device being in fluid connection with the fiber arrangement for pumping the fluid through the one or more hollow fibers.

In another aspect, the invention provides an aircraft, including the aircraft fluid supply and/or drainage device and/or the aircraft fuel cell arrangement according to any of the preceding embodiment.

In another aspect, the invention provides a method for producing a polar plate for use in a fuel cell device, the method comprising:
Additive manufacturing, by a printing device, of a polar plate or parts thereof according to any of the preceding embodiments.

In another aspect, the invention provides an additive manufacturing device, including a printing device suitable to print a polar plate or parts thereof according to any of the preceding embodiments, and a controlling means adapted to execute the step of the method.

In another aspect, the invention provides a computer program comprising instructions to cause the additive manufacturing device to execute the steps of the method.

In another aspect, the invention provides a computer-readable medium having stored thereon the computer program or a data carrier signal carrying the computer program.

In one aspect, embodiments of the invention preferably have the following effects or advantages:
- enables reduced weight compared with cast or milled cooling channels;
- enables reduced size compared with cast or milled cooling channels;
- provides improved cooling due to proximity to the heating source;
- provides improved cooling effect due to improved cooling surface/volume rate compared with larger channels;
- the hollow carbon fiber is multifunctional, since it fulfils the function as cooling channel, as well as structural reinforcement; and
- through its function as structural reinforcement, it is an enabler for a CFRP bipolar plate which displays reduced weight compared to the state-of-the-industry metallic bipolar plate.

In another aspect, embodiments of the invention preferably have the following effects or advantages:
- no added aerodynamic drag by application separate heat exchangers/radiators;
- reduced weight compared with separate heat exchangers;
- no extra space requirement compared with separate heat exchangers;
- partial reduction of systems compared with separate heat exchangers; and
- compatibility with use of hollow carbon fibers as cooling element in the fuel cell stack.

Embodiments of the invention are now explained in more detail with reference to the accompanying drawings of which
- Fig. 1: shows an example of a fuel cell device having two bipolar plates;
- Fig. 2: shows an example of a polar plate arrangement;
- Fig. 3: shows a further example of the polar plate arrangement;
- Fig. 4: shows a further example of the bipolar plate;
- Fig. 5: shows an embodiment of the polar plate;
- Fig. 6 and 7: show a detail of Fig. 5;
- Fig. 8: shows an example of a hollow fiber;
- Fig. 9 and 10: show electron microscope images of examples of hollow carbon fibers;
- Fig. 11: shows an embodiment of a fuel cell arrangement;
- Fig. 12 and 13: show examples of an aircraft cooling device for cooling a fluid in a fluid supply and/or drainage device of an aircraft in flight;
- Fig. 14: shows an embodiment of the aircraft cooling device;
- Fig. 15: shows a detail of Fig. 14;
- Fig. 16 and 17: show an embodiment of the aircraft;
- Fig. 18: shows an embodiment of an aircraft fuel cell arrangement;
- Fig. 19: shows a step of a method for producing the polar plate according to Fig. 5;
- Fig. 20: shows a further step of the method according to Fig. 19; and
- Fig. 21: shows an overview of different cooling strategies for the fuel cell device.

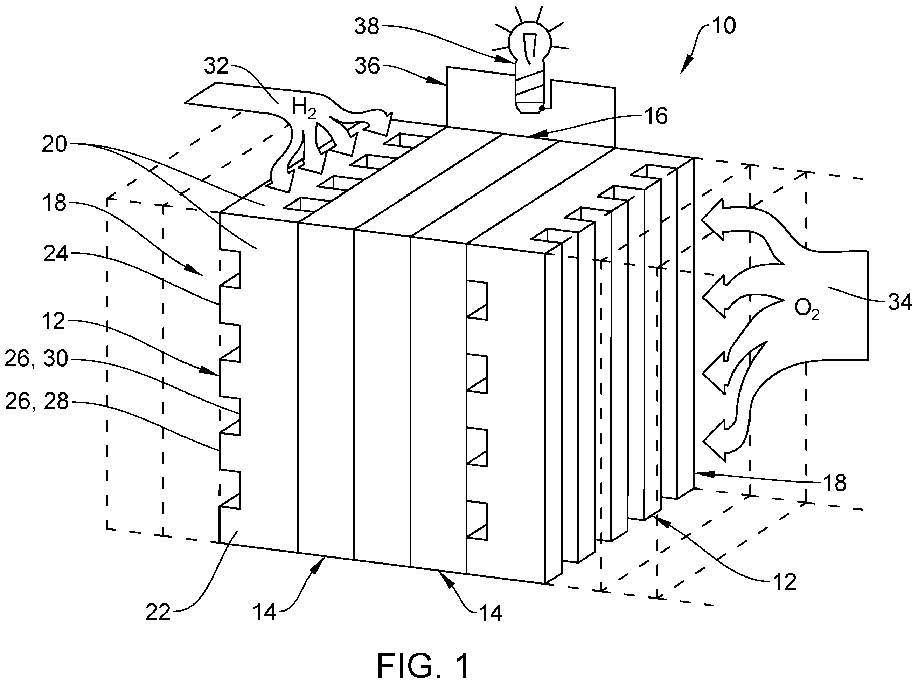

Fig. 1 shows an example of a fuel cell device 10.

The fuel cell device 10 includes two polar or bipolar plates 12, electrodes 14 in form of an anode and a cathode, and a membrane 16.

The bipolar plates 12 respectively include two opposite, active surfaces 18 and two pairs of opposite sides 20 building a perimeter 22 of the bipolar plate 12.

A plate structure 24 is respectively arranged on the active surfaces 18. The plate structure 24 includes one or more gas diffusion channels 26 in form of protrusions 28 and recesses 30 which are configured to distribute hydrogen 32 and air or oxygen 34.

In operation of the fuel cell device 10, hydrogen 32 is entered through the gas diffusion channels 26 of the left bipolar plate 12 in the figure, while air or oxygen 34 is entered through the gas diffusion channels 26 of the right bipolar plate 12 in the figure. An electrochemical process between hydrogen 32 and oxygen 34 results into electron flow in an electrical circuit 36 bridging the two electrodes 14 that can operate an electrical consumer 38. Further results are heat as well as water.

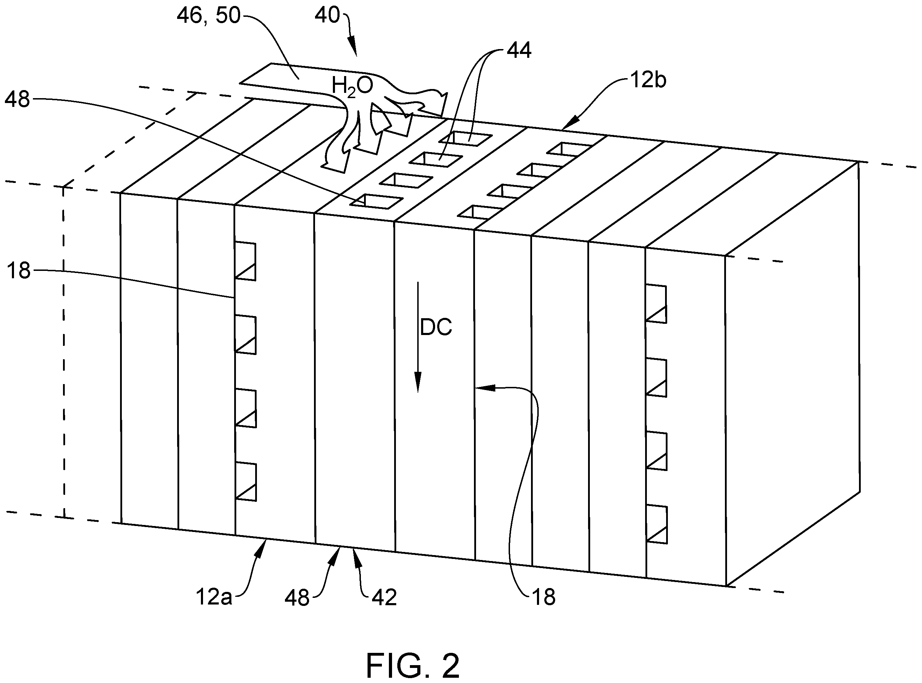

Fig. 2 shows an example of a polar plate arrangement 40.

In the embodiment as shown in Fig. 2, the polar plate arrangement 40 includes a first polar plate 12a and a second polar plate 12b. The first polar plate 12a and the second polar plate 12b include each one active surface 18, only.

The polar plate arrangement 40 is fluidly connectable with a fluid supply and/or drainage device, the latter being described later. For this, the polar plate arrangement 40 further includes a cooling segment 42 for cooling the first polar plate 12a and the second polar plate 12b.

The cooling segment 42 is arranged between the first polar plate 12a and the second polar plate 12b and includes a plurality of cooling channels 44. However, within the scope of the invention, the cooling segment 42 may also include a single cooling channel 44.

The cooling channels 44 are integrated in the cooling segment 42. Furthermore, the cooling channels 44 are arranged in parallel to each other and fluidly disconnected between end portions 48 of the respective cooling channels 44. Additionally, the plurality of cooling channels 44 extend from one end of the cooling segment 42 to another substantially aligned along a direction DC of the cooling segment 42.

The cooling channels 44 are configured for conducting a fluid 46 between the end portions 48 of the cooling channels 44. The fluid 46 may be provided in form of a gas or a liquid. The fluid 46 is preferably configured as a coolant, in particular a liquid, such as water 50 or a water-based coolant.

In the present case, the cooling channels 44 are configured for conducting water 50. The active surfaces 18 of the first polar plate 12a and the second polar plate 12b are respectively arranged on a side of the polar plates 12a, 12b that is opposed to the cooling segment 42. The end portions 48 of the cooling channels 44 56 are arranged and/or accessible such that the fluid 46 can be pumped through the cooling channels 44.

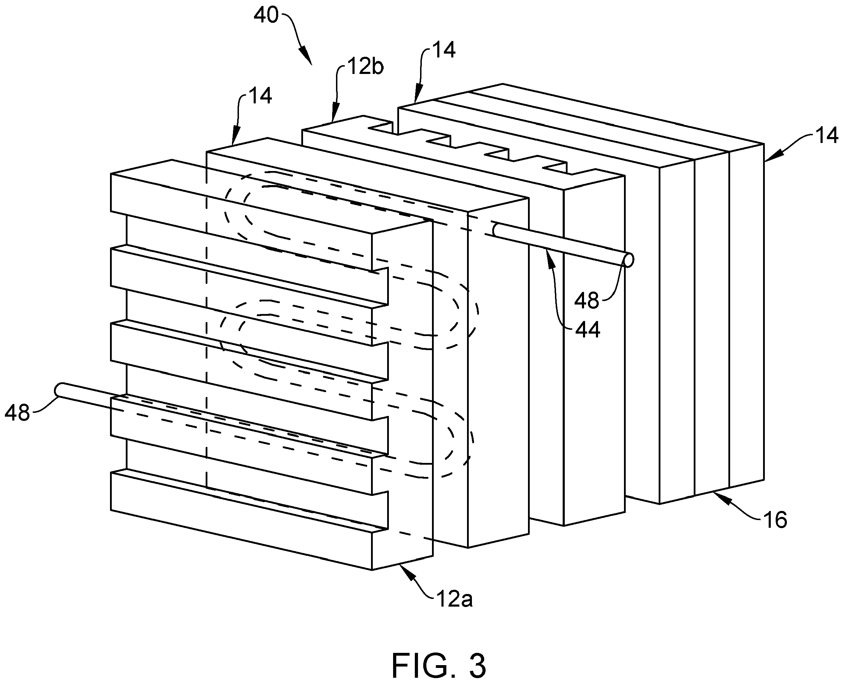

Fig. 3 shows a further example of the polar plate arrangement 40.

The example as shown in Fig. 3 may include any of the features as discussed with reference to Fig. 2. In contrast to the embodiment of the polar plate arrangement 40 as shown in Fig. 2, however, the cooling segment 42 includes here a single integrated cooling channel 44 that extends through the cooling segment 42.

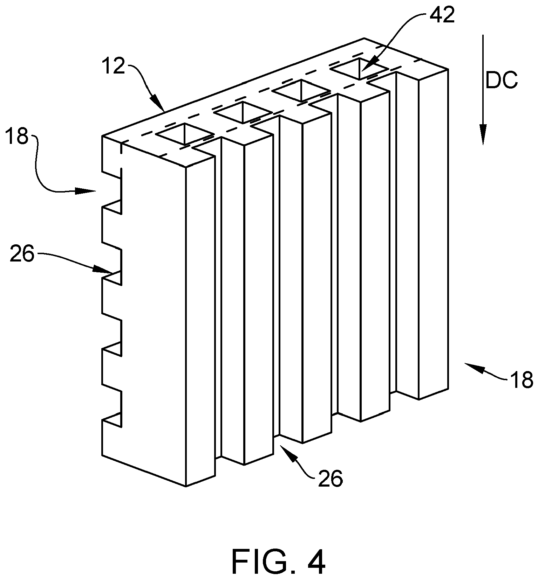

Fig. 4 shows a further example of the bipolar plate 12.

The example as shown in Fig. 4 may include any of the features as discussed with reference to Fig. 1, 2, and 3. In contrast to the embodiment of the bipolar plate 12 as shown in Fig. 1 and the embodiments of the polar plate arrangement 40 as shown in Fig. 2 and 3, the plurality of cooling channels 42 is in this case integrated in the bipolar plate 12 in a region between the active surfaces 18.

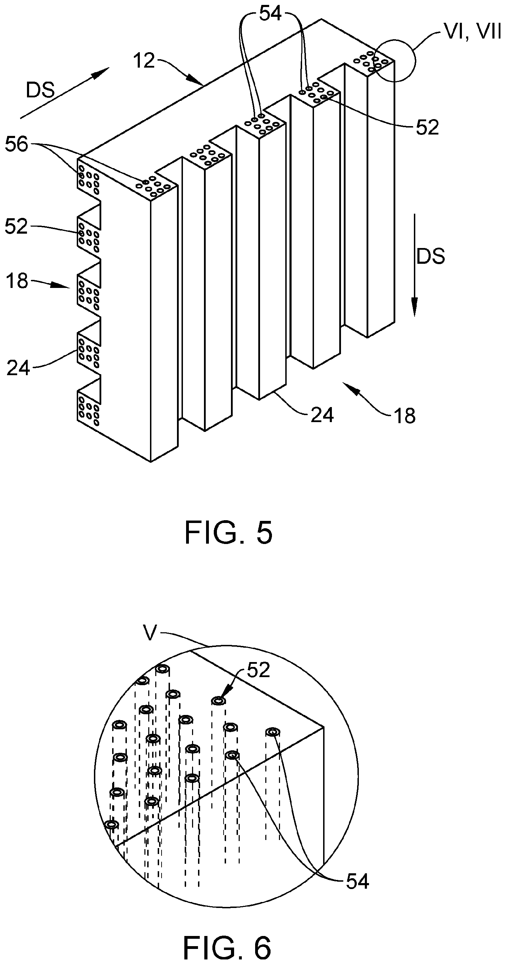

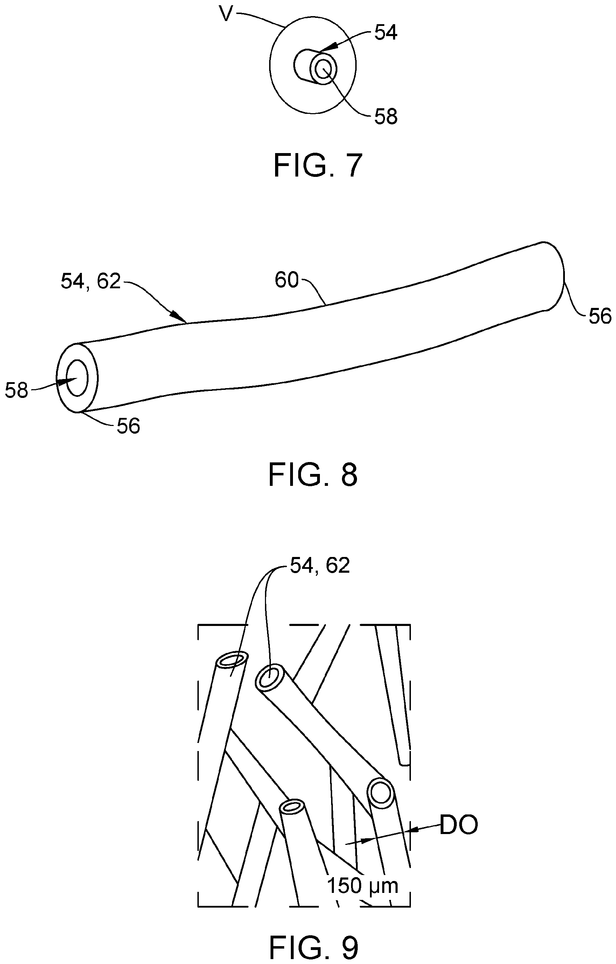

Fig. 5 shows an embodiment of the polar or bipolar plate 12, whereas Fig. 6 and 7 show a detail of said bipolar plate 12.

The bipolar plate 12 as shown in Fig. 5 is fluidly connectable with a fluid supply and/or drainage device, the latter being described later. For this, the bipolar plate 12 includes two fiber arrangements 52 that are each respectively arranged substantially parallel to and in a vicinity of the corresponding active surface 18. However, within the scope of the invention, the bipolar plate 12 may also include a single fiber arrangement 52.

The fiber arrangements 52 are integrated in the bipolar plate 12. In the present case, the fiber arrangements 52 are respectively integrated in the plate structures 24 of the corresponding active surfaces 18. Moreover, each fiber arrangement 52 includes a plurality of hollow fibers 54. However, with the scope of the invention, each fiber arrangement 52 may also include a single hollow fiber 54.

Furthermore, the hollow fibers 54 of the corresponding fiber arrangement 52 are arranged in parallel to each other and fluidly disconnected between end portions 56 of the respective hollow fibers 54. Additionally, the plurality of hollow fibers 54 of the corresponding fiber arrangement 52 is substantially aligned along the direction DS of the plate structure 24.

The hollow fibers 54 are configured for conducting the fluid 46 between the end portions 56 of the hollow fibers 54. The fluid 46 may be provided in form of a gas or a liquid. The fluid 46 is preferably configured as a coolant, in particular a liquid, such as water 50 or a water-based coolant.

Additionally, the hollow fibers 64 are configured as a structure reinforcement of the bipolar plate 12. Thus, the bipolar plate 12 may be configured as a composite and/or laminate, wherein the fiber arrangement 52 preferably builds a carbon-fiber reinforced plastic composite. The end portions 56 of the hollow fibers 64 are arranged and/or accessible such that the fluid 46 can be pumped through the hollow fibers 54.

Fig. 8 shows an example of the hollow fiber 54.

The hollow fiber 54 shown in Fig. 8 includes a single cavity 58 that is continuously extending between the end portions 56 of the hollow fiber 54. However, within the scope of the invention, the hollow fiber 54 may also include more than one cavity 58. The hollow fiber 54 may be integrated in a filament 60, preferably a thermoplastic filament.

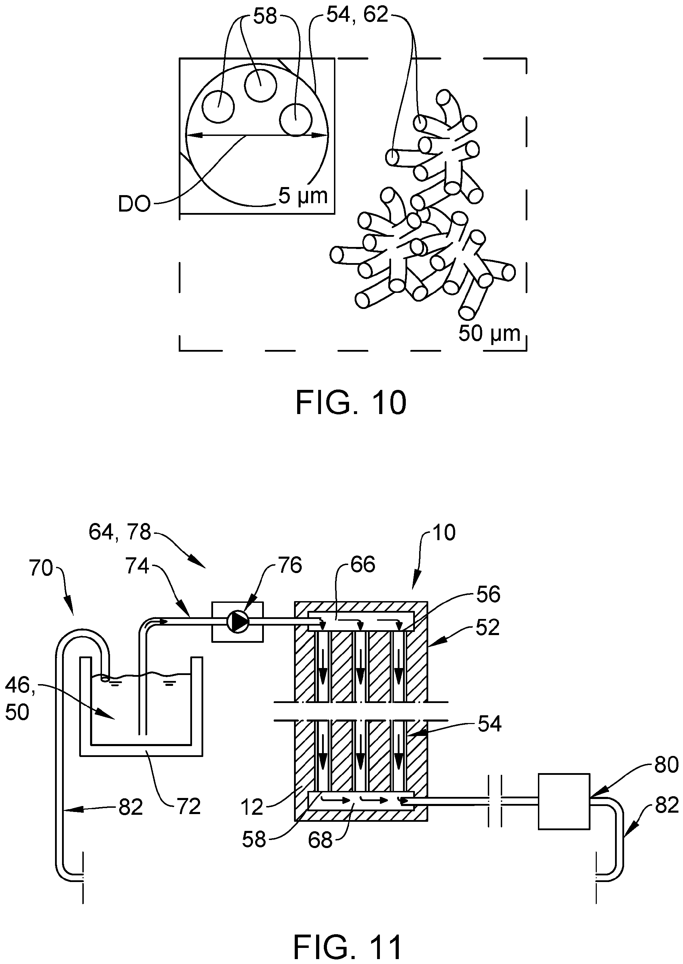

In preferred embodiments, the hollow fiber 54 is a hollow carbon fiber 62. Examples of such hollow carbon fibers 62 are shown Fig. 9 and 10 that represent electron microscope images of hollow carbon fibers 62 of different diameters. An outer diameter DO of the hollow carbon fiber 62 with one cavity 58 may be in the range 50 µm to 100 µm (Fig. 9). This can be compared to a solid standard carbon fiber with a diameter in the range of 7 µm to 10 µm. Alternatively, hollow carbon fibers 62 with multiple cavities 58 may be used (Fig. 10). These may have an outer diameter DO in the range of 10 µm to 20 µm.

Fig. 11 shows an embodiment of a fuel cell arrangement 64.

The fuel cell arrangement 64 includes an embodiment of the fuel cell device 10.

The fuel cell device 10 includes the polar or bipolar plate 12 according to Fig. 5, 6 and 7. Thus, the fuel cell device 10 is fluidly connectable with a fluid supply and/or drainage device, the latter being described later. For better representation, only the fiber arrangement 52 of the bipolar plate 12 is shown.

The fiber arrangement 52 of the bipolar plate 12 includes an inlet 66 and an outlet 68. The inlet 66 and the outlet 68 are respectively fluidly connected with the corresponding end portions 56 of the hollow fibers 54. Furthermore, the inlet 66 and the outlet 68 are integrated in the polar or bipolar plate 12. However, within the scope of the invention, the inlet 66 and/or the outlet 68 may also be external to the polar or bipolar plate 12 and/or the fuel cell device 10.

The fuel cell arrangement 52 also includes a fluid supply and/or drainage device 70 for pumping the fluid 46 through the hollow fibers 54. For this, the fluid supply and/or drainage device 70 includes a tank 72 filled with fluid 46 and a pipe arrangement 74 for conducting the fluid 46 to the inlet 66. The pipe arrangement 74 includes a pump 76 for pumping the fluid 46 to the inlet 66. In the inlet 66, the fluid 46 is distributed among the hollow fibers 54. The fluid supply and/or drainage device 70 further includes a temperature exchange or cooling device 80 for cooling the fluid 46.

The fuel cell arrangement 64 as shown in Fig. 11 is configured as a fluid recirculation system 78 for circulating the fluid 46 through the hollow fibers 54. In other words, the fluid 46 from the outlet 68 is reused for cooling the fuel cell device 10. For this, the fluid 46 is conducted from the outlet 68 to the cooling device 80, where the fluid 46 can be cooled down again. From the cooling device 80, the fluid 46 is returned via a further pipe arrangement 82 to the tank 72.

Within the scope of the invention, the cooling device 80 of the fluid supply and/or drainage device 70 may also be arranged upstream the fuel cell device 10.

The fuel cell arrangement 64 may additionally include a temperature sensor for sensing the temperature of the bipolar plate 12. Thus, the fluid supply and/or drainage system 70 may be controlled or operated based on the measured temperature as needed.

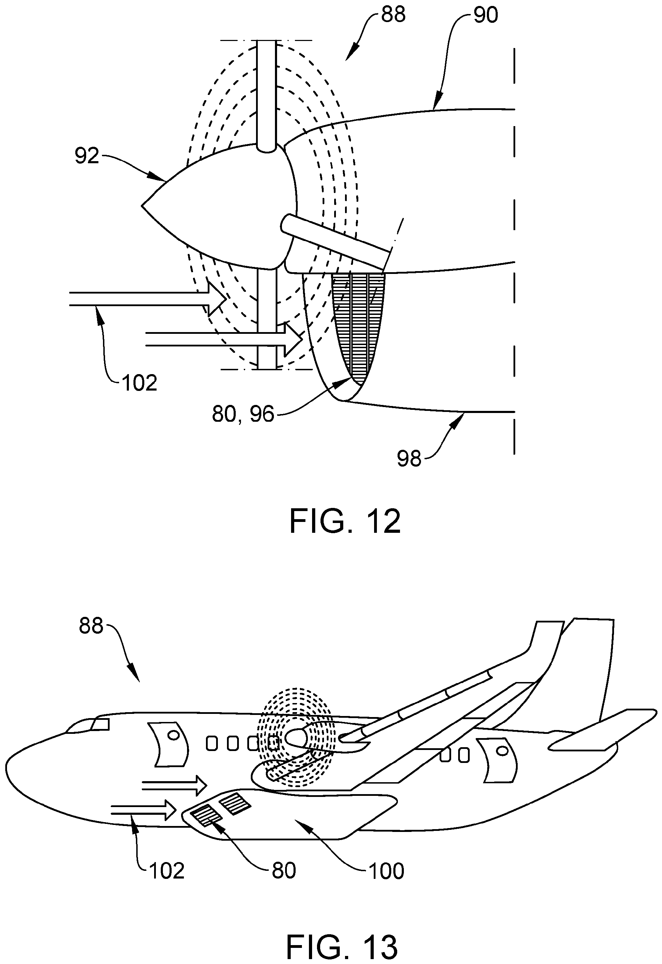

Fig. 12 and 13 show examples of a cooling device 80 for cooling the fluid 46 in the fluid supply and/or drainage device 70 of an aircraft 88 in flight.

As shown in Fig 12, the cooling device 80 may be attached to an engine 90 of the aircraft 88. The engine 90 may include a propeller 92. The cooling device 80 include a radiator or heat exchanger 96 and a radiator cover 98. As shown in Fig. 13, the cooling device 80 may additionally or alternatively be attached to a belly fairing 100 of the aircraft 88. In both cases, an airflow 102 is directed to the cooling device 84.

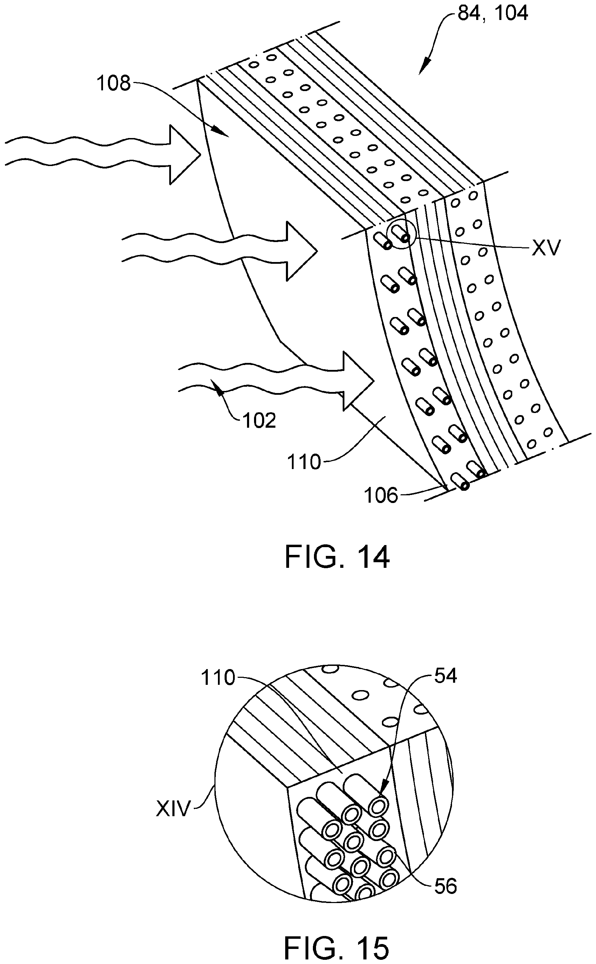

Fig. 14 shows an embodiment of an aircraft cooling device 84 for cooling the fluid 46 in the fluid supply and/or drainage device 70 of the aircraft 88 in flight, whereas Fig. 15 shows a detail of Fig. 15.

The aircraft cooling device 84 is configured as a skin component 104 for and/or of the aircraft 88. The skin component 104 is fluidly connectable with the fluid supply and/or drainage device 70.

For this, the skin component 104 includes a ply 106 of a plurality of hollow fibers 54 as described with reference to Fig. 8 to 10, such that the fluid supply and/or drainage device 70 is enabled to pump the fluid 46 through the hollow fibers 54 when in fluid connection with the ply 106. However, with the scope of the invention, the ply 106 may also include a single hollow fiber 54.

The ply 106 is arranged in the vicinity of an outer surface 108 of the skin component 104. Furthermore, the ply 106 is integrated in the skin component 104. Here, the ply 106 is integrated in an outermost layer 110 of the skin component 104.

The plurality of hollow fibers 54 of the ply 106 are arranged in parallel to each other and fluidly disconnected between the end portions 56 of the respective hollow fibers 54.

The hollow fibers 54 are configured for conducting the fluid 46 between the end portions 56 of the hollow fibers 54. Additionally, the hollow fibers 54 are configured as a structure reinforcement of the skin component 104. Thus, the skin component may be regarded as a composite and/or laminate, the ply 106 preferably building a carbon-fiber reinforced plastic composite. The end portions 56 of the hollow fibers 54 are arranged and/or accessible such that the fluid 46 can be pumped through the hollow fibers 54.

In preferred embodiments, the hollow fibers 54 may again be carbon fibers 62 having one or more cavities 58.

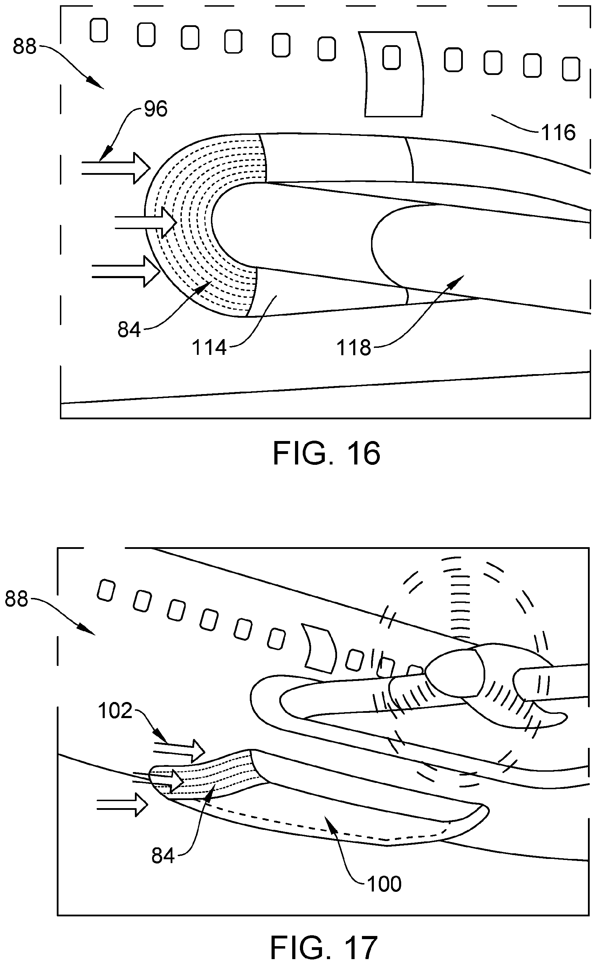

Fig. 16 and 17 respectively show an embodiment of the aircraft 88. The aircraft 88 includes the aircraft cooling device 84 as described with reference to Fig. 14 and 15.

As shown in Fig 16, the aircraft cooling device 84 may be integrated in a wing-fuselage fairing 114 between a fuselage 116 and a wing 118 of the aircraft 88. As shown in Fig. 17, the aircraft cooling device 84 may also be integrated in the belly fairing 100. In both cases, the airflow 102 is directed to the aircraft cooling device 84.

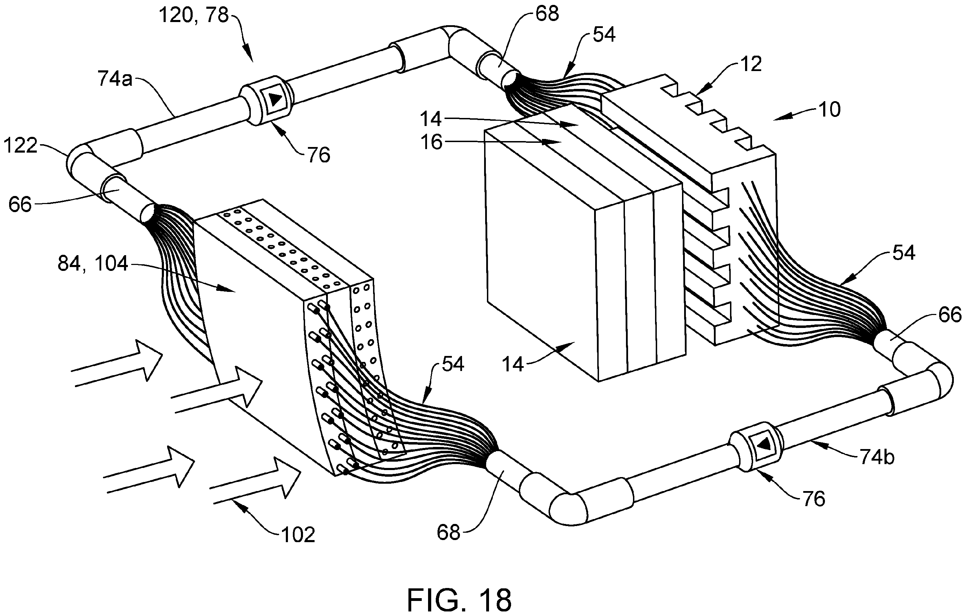

Fig. 18 shows an embodiment of an aircraft fuel cell arrangement 120 for the aircraft 88.

The aircraft fuel cell arrangement 120 as shown in Fig. 16 includes an embodiment of an aircraft fuel supply and/or drainage device 122.

The aircraft fuel supply and/or drainage device 122 includes the aircraft cooling device 84 as described with reference to Fig. 14 and 15, a first pipe arrangement 74a, and a second pipe arrangement 74b. Each pipe arrangement 74a, 74b has a pump 76, an inlet 66 and an outlet 68.

The aircraft fuel cell arrangement 120 further includes the fuel cell device 10 as described with reference to Fig. 11.

The skin component 104 of the aircraft cooling device 84 is fluidly connected with the inlet 66 of the first pipe arrangement 74a. Downstream therefrom, the outlet 68 of the first pipe arrangement 74a is fluidly connected with the fuel cell device 10. Further downstream therefrom, the fuel cell device 10 is fluidly connected with the inlet 66 of the second pipe arrangement 74b. Further downstream therefrom, the outlet 68 of the second pipe arrangement 74b in fluidly connected with the skin component 104. In other words, the aircraft fuel cell arrangement 120 is again configured as a fluid circulation system 78.

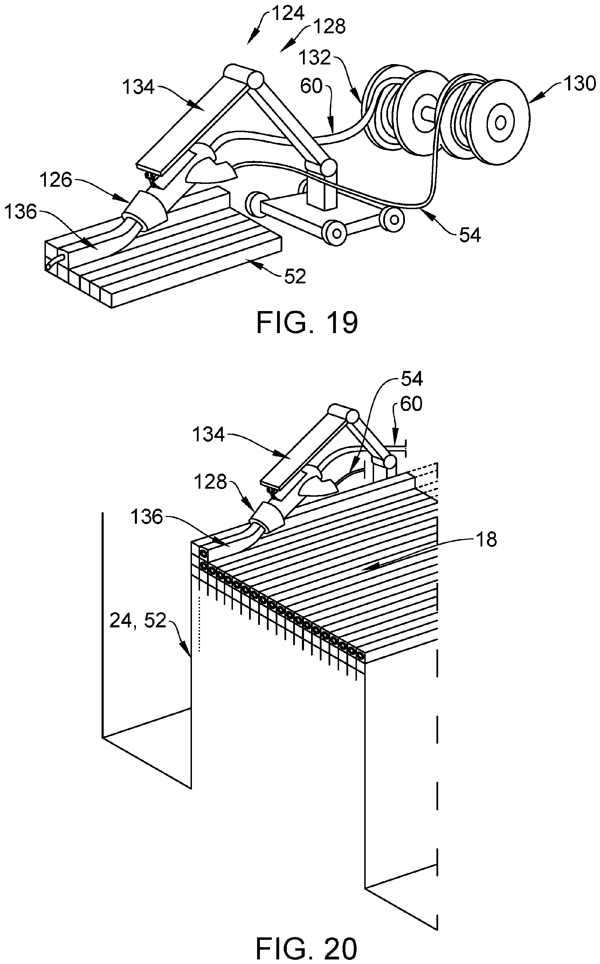

In the following, a method for producing the polar or bipolar plate 12 according to Fig. 5, 6, and 7 is described with reference to Fig. 19 and 20.

Fig. 19 shows a step of the method.

The step includes an additive manufacturing of the polar or bipolar plate 12. The additive manufacturing is achieved by an additive manufacturing device 124 including a printing device 126.

In the present case, the printing device 126 includes a coaxial printing head 128. The coaxial printing head 128 includes a first spool 130 and a second spool 132. The hollow fiber 54 is wrapped around the first spool 130. The filament 60 is wrapped around the second spool 132.

The additive manufacturing device further includes a robotic arm 134. The coaxial printing head 128 is attached to the robotic arm 134.

The additive manufacturing device 124 further includes a controlling means (not shown). The controlling means is adapted to control the printing device 126 and the robotic arm 134.

A computer program (not shown) is stored in the controlling means. The computer program causes the additive manufacturing device 124 to execute the following steps:
The coaxial printing head 128 prints an integrated filament 136. In other words, the coaxial printing head 128 adds the filament 60 to the hollow fiber 54. Thus, the hollow fibers 54 are printed integrated in and/or surrounded by the filament 60.

A plurality of integrated filaments 136 may be printed in parallel to each other for building the fiber arrangement 52. Thereby, the integrated filaments 136 may be stacked. The integrated filaments 136 may additionally be printed equidistant to each other.

Fig. 20 shows a further step of the method.

The integrated filaments 136 are printed in the vicinity of the active surface 18 that is bordering to one of the electrodes 14. Here, the integrated filaments 136 are printed on and/or integrated in the plate structure 24. In other words, the plate structure 24 may be configured as fiber arrangement 52 and vice versa. Thus, the fiber arrangement 52 is arranged advantageously close to the heat source.

According to preferred embodiments of the invention, it is possible to arrange the fiber arrangement 52 of one or more hollow fibers 54 integrated in the polar plate 12 and close to the heat source. Thus, efficient cooling of the polar plate 12 and the fuel cell device 10 may be achieved.

According to preferred embodiments of the invention, it is possible to integrate the ply 106 of one or more hollow fibers 54 in the skin component 104 of the aircraft 88. Thus, the airflow 102 can be used to cool down the fluid 46 in the aircraft fluid supply and/or drainage device 122.

In one aspect, the invention provides the polar plate 12. The invention further provides the fuel cell device 10, the fuel cell arrangement 64, the method for producing the polar plate 12, the additive manufacturing device 124, the computer program, and a computer-readable medium (not shown) having stored thereon the computer program.

In another aspect, the invention provides the aircraft cooling device 84 for cooling the fluid 46 in the fluid supply and/or drainage device 70. The invention further provides the aircraft fluid supply and/or drainage device 122, the aircraft fuel cell arrangement 120, and the aircraft 88.

Various aspects of preferred embodiments of the invention can be summarized as follows:
In order to realize emission free aircraft propulsion, fuel cells have emerged as a promising alternative to convert energy stored in liquid hydrogen tanks into electricity to power electrical engines.

Fig. 1 shows a principal buildup of a Proton Exchange Membrane (PEM) fuel cell that is most commonly used. From left to the right the constituents are: a bipolar plate, an electrode, a membrane, followed by the second electrode, and the second bipolar plate.

Hydrogen is entered through the gas diffusion channels in the left bipolar plate. Air or oxygen is entered through the gas diffusion channels of the right bipolar plate. An electrochemical process between hydrogen and oxygen results into an electron flow in a circuit bridging the two electrodes (or bridging several cells, if stacked) that can operate an electrical consumer. Further results are heat as well as water, that exits off the right electrode.

Depending on used materials, size of fuel cell, stacking of cells etc. an optimal operating temperature exists. For typical low temperature PEM fuel cells, this may be in the range of 70°C to 80°C. For smaller fuel cells, it may be sufficient with air cooling. Larger energy demand will necessitate large fuel cell size as well as the stacking of several cells. This may cause an operating temperature that exceeds the optimal one. In such cases, it may be necessary with liquid cooling.

In Fig. 2, liquid cooling of stacked PEM fuel cells is shown by means of dedicated cooling channels. These are here located in a special cooling segment that is installed between polar plates (i.e., the bipolar plate is here divided into one polar plate each for hydrogen and oxygen). Liquid coolant is passed through the cooling channels under pressure at a rate necessary to keep the optimal operating temperature. As shown in Fig. 3, also a single cooling channel may be possible for cooling.

The solution seen in Fig. 2 is simple and allows to re-equip air cooled fuel cells with liquid cooling. However, it represents an extra segment, commonly built of metal. This increases the weight and size of the stacked fuel cell significantly. Thus, this solution, although fine for land-based applications, may not be optimal for an airborne fuel cell.

Other solutions preferably include a bipolar plate with integrated coolant channels, such as shown in Fig. 4. This, essentially a variant of the solution in Fig. 2, can be built somewhat more compact and this may not be as disadvantageous. However, also here applies that the bipolar plate increases in size and weight considerably due to the extra coolant channels. Since this solution also results in added weight and volume, it may not be optimal for airborne applications.

Since the 1950s reinforcement fibers, except the solid ones already known, have been researched that display one or several internal cavities. Fiber materials have ranged from glass to carbon. There exist variants with one or multiple cavities inside the fibers. Fig. 8 shows a carbon fiber with a single continuous cavity inside and Fig. 9 shows an electron microscope image thereof. The outer diameter of these fibers may be in the range of 50-100 µm. This can be compared to solid standard carbon fibers with a diameter in the range of 7-10 µm. Recent research has also resulted in new variants of hollow carbon fibers with multiple cavities that display an outer diameter in the range of 10-20 µm (see electron microscope image in Fig. 10). Hollow carbon fibers of these different variants can be used for various purposes, such as to transport gas or liquid.

In addition to the well-known short- and long-fiber reinforcements of additively manufactured plastic parts, recent progress allows for continuous reinforcement fibers. Fig. 19 shows a plastic part being manufactured additively by means of a printing head which produces filaments with integrated continuous fibers. The fibers are provided from a separate spool, in addition to the filament spool. The fiber may consist of a standard fiber bundle ("tow", or single cables, such as copper cable). The fiber material may be glass or carbon.

An idea of preferred embodiments of the invention is to enable efficient liquid cooling of stacked fuel cells by means of using multi-functional hollow carbon fibers in the bipolar plates directly as gas diffusion channels. This arrangement will save weight, since no added space for large cooling channels is needed, and the coolant is acting closer to the heat source, i.e., the electrode/membrane with its electro-chemical reactions. The fibers are multi-functional in as far as they act structurally and transport liquid coolant.

Fig. 5, 6, and 7 show an additively manufactured thermoplastic bipolar plate with integrated continuous hollow carbon fibers functioning as structural reinforcement as well as cooling channels. The thermoplastic material can be supplied with, e.g., graphene at the faces for better electrical connection, as well as, e.g., Carbon Nano Tubes (CNTs) for improved internal electrical conduction.

It is more efficient to use a multitude of coolant channels, rather than one or a few large channels. The reason is that the total surface area increases using smaller channels, for a given volume of liquid coolant.

It can be seen in the figures that the hollow carbon fibers are arranged in the wall areas between the gas diffusion channels on both sides of the bipolar plate, i.e., both for hydrogen as well as for air/oxygen.

In Fig. 11, a schematic view of the cooling function of the hollow carbon fibers is shown, including a coolant tank, a pump, hollow carbon fibers and a possible recirculation system. Thus, the hollow carbon fibers contribute to cooling the bipolar plate, since cooled liquid is passing through them. The effect is being brought close to the heating source, i.e., the electrode-membrane segments of the fuel cell.

Fig. 20 shows one instance of how to integrate the hollow carbon fibers into a bipolar plate. The additive manufacturing printing head as discussed with reference to Fig. 19 integrates a cable or fiber bundle into a thermoplastic filament. The hollow carbon fiber, as discussed with reference Fig. 8, 9, and 10 are used here as the integrated fiber in the filament. In the figure, it is seen that the hollow fibers are placed to function as cooling channels and located close to the edge and bordering to the fuel cell's electrode, i.e., close to the source of the heat generation.

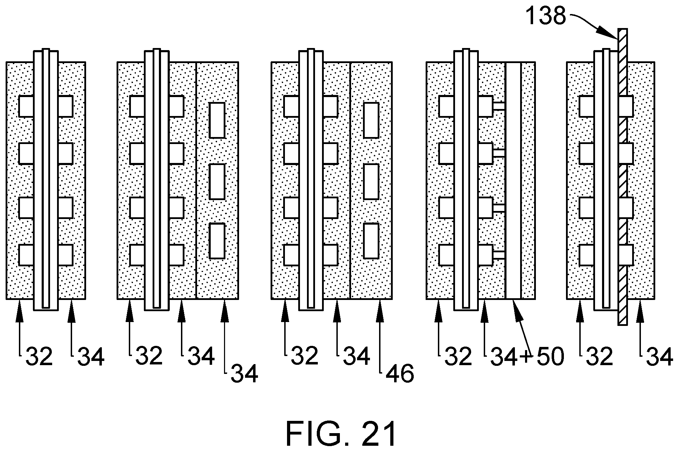

Different cooling strategies exist for fuel cells. The simplest is the letting the inserted air at the cathode function as well as an air coolant, see leftmost strategy in Fig. 21. The next strategy is the use of a separate cooling segment with channels for air, seen as the second from left in the figure. The next strategy is a separate segment for liquid cooling, seen as the third strategy from the left in the figure. Also shown is evaporative cooling (fourth from the left) and cooling with heat spreaders 138 (rightmost).

For cooling a coolant in land and air vehicles, the cooling head wind usually is utilized. Especially in an aircraft, where the outer temperature is appr. -60°C, it contains cooling potential that should be utilized.

Depending on size and location of the fuel cells, possibilities that offer themselves are: heat exchanger/radiator at the engine, as is applied, e.g., for piton engines, see Fig. 12, or in other locations with head wind such as radiators in the belly fairing, see Fig. 13. The solutions have all in common that considerable aerodynamic drag is generated, which increases energy consumption.

An idea of preferred embodiments of the invention is to have a large efficient cooling surfaces for fuel cell liquid coolant, without compromising on the aerodynamics.

Preferred embodiments of the invention propose the utilization of hollow carbon fibers for cooling the coolant liquid of fuel cells in an aircraft and by letting the hollow carbon fibers act as reinforcement in one of the outermost layers of a composite laminate, serving as outer skin, towards the cold outer air (-60°C). In this manner the surface will remain aerodynamic and no added drag will result. At the same time practically no added weight will be needed compared to a "radiator" heat exchanger, if pipes were used. Relatively large cooling surfaces can be used in this manner, compared with limited radiator areas.

Fig. 14 shows a composite laminate with hollow carbon fibers in the outermost layer, a detail of which shows Fig. 15.

Fig. 18 shows the overall system for cooling the fuel cell stack in an aircraft by liquid coolant, that is cooled by air flow over an aerodynamic composite laminate.

Fig. 16 and 17 show practical application examples of the aerodynamic heat exchangers with the hollow carbon fibers in the outermost layer, as part of: the wing-fuselage fairing (Fig. 16), and the belly fairing (Fig. 17). In this manner, no added aerodynamic drag will occur, and weights are reduced compared with separate heat exchangers in the form of radiators.

### List of reference signs:

- 10: fuel cell device
- 12: polar or bipolar plate
- 12a: first polar plate
- 12b: second polar plate
- 14: electrode
- 16: membrane
- 18: active surface
- 20: side
- 22: perimeter
- 24: plate structure
- 26: gas diffusion channel
- 28: protrusion
- 30: recess
- 32: hydrogen
- 34: air/oxygen
- 36: electrical circuit
- 38: electrical consumer
- 40: polar plate arrangement
- 42: cooling segment
- 44: cooling channel
- 46: fluid (gas or liquid)
- 48: end portion of cooling channel
- 50: water
- 52: fiber arrangement
- 54: hollow fiber
- 56: end portion of hollow fiber
- 58: cavity
- 60: filament
- 62: carbon fiber
- 64: fuel cell arrangement
- 66: inlet
- 68: outlet
- 70: fluid supply and/or drainage device
- 72: tank
- 74: pipe arrangement
- 74a: first pipe arrangement
- 74b: second pipe arrangement
- 76: pump
- 78: fluid recirculation system
- 80: temperature exchange/cooling device
- 82: further pipe arrangement
- 84: aircraft cooling device
- 88: aircraft
- 90: engine
- 92: propeller
- 96: radiator/heat exchanger
- 98: radiator cover
- 100: belly fairing
- 102: airflow
- 104: skin component
- 106: ply
- 108: outer surface
- 110: outermost layer
- 114: wing-fuselage fairing
- 116: fuselage
- 118: wing
- 120: aircraft fuel cell arrangement
- 122: aircraft fluid supply and/or drainage device
- 124: additive manufacturing device
- 126: printing device
- 128: coaxial printing head
- 130: first spool
- 132: second spool
- 134: robotic arm
- 136: integrated filament
- 138: heat spreader
- DS: direction of plate structure
- DO: outer diameter
- DC: direction of cooling segment

## Claims

1. An aircraft cooling device (84) for cooling a fluid (46) in a fluid supply and/or drainage device (70) of an aircraft (88) in flight, the aircraft cooling device (84) being configured as a skin component (104) for the aircraft (88), the skin component (104) including an integrated ply (106) of one or more hollow fibers (54), each hollow fiber (54) being configured for conducting the fluid (46) from one end portion (56) to another end portion (56) of the hollow fiber (54) such that the fluid supply and/or drainage device (70) is enabled to pump the fluid (46) through the one or more hollow fibers (54) when in fluid connection with ply (106).

2. The aircraft cooling device (84) according to claim 1, wherein the hollow fibers respectively:
- are configured as carbon fibers (62); and/or
- are configured for structure-reinforcing the skin component (104); and/or
- include one or more cavities (58) extending from one of the end portions (56) to the other of the end portions (56) of the hollow fiber (54).

3. The aircraft cooling device (84) according to any of the preceding claims, wherein the skin component (104) is configured as a composite and/or laminate, the ply (106) preferably building a carbon-fiber reinforced plastic composite.

4. The aircraft cooling device (84) according to any of the preceding claims, wherein the ply (106) is integrated in an outermost layer (110) of the skin component (104).

5. The aircraft cooling device (84) according to any of the preceding claims, wherein the hollow fibers (54) are configured for conducting a coolant, preferably a liquid, more preferably water (50) or a water-based coolant.

6. The aircraft cooling device (84) according to any of the preceding claims, wherein the skin component (104) is configured as a wing-fuselage fairing (114), a belly fairing (100) and/or a part thereof.

7. An aircraft fluid supply and/or drainage device (122), including the aircraft cooling device (84) according to any of the preceding claims.

8. An aircraft fuel cell arrangement (120), including the aircraft fluid supply and/or drainage device (122) according to claim 7 and a fuel cell device (10), the fuel cell device (10) being configured to be fluidly connectable with the aircraft fluid supply and/or drainage device (122), the aircraft fluid supply and/or drainage device (122) being in fluid connection with the fuel cell device (10) for cooling thereof.

9. The aircraft fuel cell arrangement (120) according to claim 8, wherein the fuel cell device (10) includes a polar plate (12), the polar plate (12) including an integrated fiber arrangement (52) of one or more hollow fibers (54), each hollow fiber (54) being configured for conducting a fluid (46) from one end portion (56) to another end portion (56) of the hollow fiber (54) such that the fluid (46) can be pumped through the one or more hollow fibers (54), the aircraft fluid supply and/or drainage device (122) being in fluid connection with the fiber arrangement (52) for pumping the fluid (46) through the one or more hollow fibers (54).

10. An aircraft (88), including the aircraft fluid supply and/or drainage device (122) according to claim 7 and/or the aircraft fuel cell arrangement (120) according to claim 8 or 9.
